# EUROPÄISCHE PATENTSCHRIFT

(11) **EP 1 738 089 B1**
(45) Veröffentlichungstag und Bekanntmachung des Hinweises auf die Patenterteilung: **09.12.2009**
(21) Anmeldenummer: 05716510.2
(22) Anmeldetag: 02.04.2005
(51) Int. Cl.: F16D 3/79

(54) **MEMBRANKUPPLUNG IN KOMPAKTER BAUWEISE**
COMPACTLY DESIGNED MEMBRANE-TYPE COUPLING
ACCOUPLEMENT MEMBRANAIRE DE STRUCTURE COMPACTE

(30) Priorität: 23.04.2004 DE 202004006442 U
(43) Veröffentlichungstag der Anmeldung: 03.01.2007
(73) Patentinhaber: Hackforth GmbH, 44653 Herne (DE)
(72) Erfinder: ÜCKERT, Heinrich, 45772 Marl (DE)
(74) Vertreter: Behrendt, Arne
(86) Internationale Anmeldenummer: PCT/EP2005/003479
(87) Internationale Veröffentlichungsnummer: WO 2005/106270

(56) Entgegenhaltungen:
- DE-A1- 2 741 652

## Beschreibung

Die vorliegende Neuerung betrifft eine Membrankupplung mit einem Antriebsflansch und mit einem Abtriebsflansch, die zwecks Drehmomentübertragung über Membranpakete dergestalt miteinander verbunden sind, dass ein Antriebs-Membranpaket mit dem Antriebsflansch verspannt ist, dass zwei parallel geschaltete Abtriebs-Membranpakete mit dem Abtriebsflansch verspannt sind und dass die Membranpakete durch einen, aus Klemmringen aufgebauten Spannsatz miteinander verspannt sind.

Die US 4 492 583 A offenbart eine Kupplung, die aus zwei über eine Hohlwelle gekoppelte Membrankupplungen der vorliegenden Gattung zusammen gesetzt ist.

Zweck einer solchen Membrankupplung ist die winkelgetreue Drehmomentübertragung zwischen Maschinenelementen, die starken Fluchtabweichungen unterworfen sind.

Nachteilig bei der vorbekannten Membrankupplung ist Ihr verhältnismäßig großer Bauraum. Dieser ist darin begründet, dass die in Serie geschalteten Membranpakete, also das Antriebs-Membranpaket und die beiden parallel geschalteten Abtriebs-Membranpakete, in axialer Richtung hintereinander zwischen den Flanschen angeordnet sind. Dies führt dazu, dass sich der Spannsatz fast vollständig über die gesamte axiale Länge der Membrankupplung erstreckt und folglich einen erheblichen Teil der Kupplungsmasse ausmacht.

Das Dokument DE 2741652 offenbart eine Membrankupplung gemäss dem Oberbegriff Anspruchs 1

Aufgabe der vorliegenden Neuerung ist es, eine Membrankupplung der eingangs genannten Art dahingehend umzugestalten, dass die einen kompakteren Bauraum einnimmt und zugleich ihr Gewicht reduziert wird. Diese Aufgabe wird durch die Merkmale des Anspruchs 1 gelöst

Dies gelingt dadurch, dass das Antriebs-Membranpaket zwischen den beiden Abtriebs-Membranpaketen angeordnet wird.

Ein Grundgedanke der vorliegenden Neuerung besteht darin, den Kraftfluss zwischen den Flanschen zu verschachteln. Demnach wird das Antriebs-Membranpaket etwa in der Symmetrieebene zwischen den Kupplungshälften angeordnet und je ein Abtriebs-Membranpaket zwischen dem zentral angeordneten Antriebs-Membranpaket und einen Flansch. Der Kraftfluss fließt von dem Antriebsflansch über das Antriebs-Membranpaket in den Spannsatz hinein. Hier teilt er sich auf die beiden parallel geschalteten Abtriebs-Membranpakete auf und fließt beiderseits der Symmetrieebene in den Abtriebsflansch ab.

Darüber hinaus wird durch die neuerungsgemäße Anordnung der Membranpakete eine in hohem Maße symmetrische Konstellation der Bauteile erreicht. Diese trägt dazu bei, die Laufruhe der Kupplung zu steigern und starken Versatz zwischen den Kupplungshälften auszugleichen.

Des Weiteren kann die axiale Stärke des Spannsatzes so bemessen sein, dass sie dem axialen Abstand der Flansche entspricht. Durch diese Maßnahme wird die Einbaulänge der Membrankupplung weiter reduziert. Eine andere Dimensionierung des Spannsatzes in ebenso möglich.

Die radiale Ausdehnung der Membrankupplung kann indes verringert werden, indem man den Spannsatzbolzen-Durchmesser, den Lochkreis-Durchmesser und den Durchmesser, auf dem die Bolzen/Hülsen-Anordnungen angeordnet sind, in der Weise dimensioniert, wie es Schutzanspruch 4 vorschlägt.

Die vorliegende Neuerung soll nun anhand eines Ausführungsbeispiels erläutert werden. Es zeigen hierfür:
- Figur 1:: Membrankupplung im Längschnitt;
- Figur 2:: Membrankupplung in Vorderansicht;

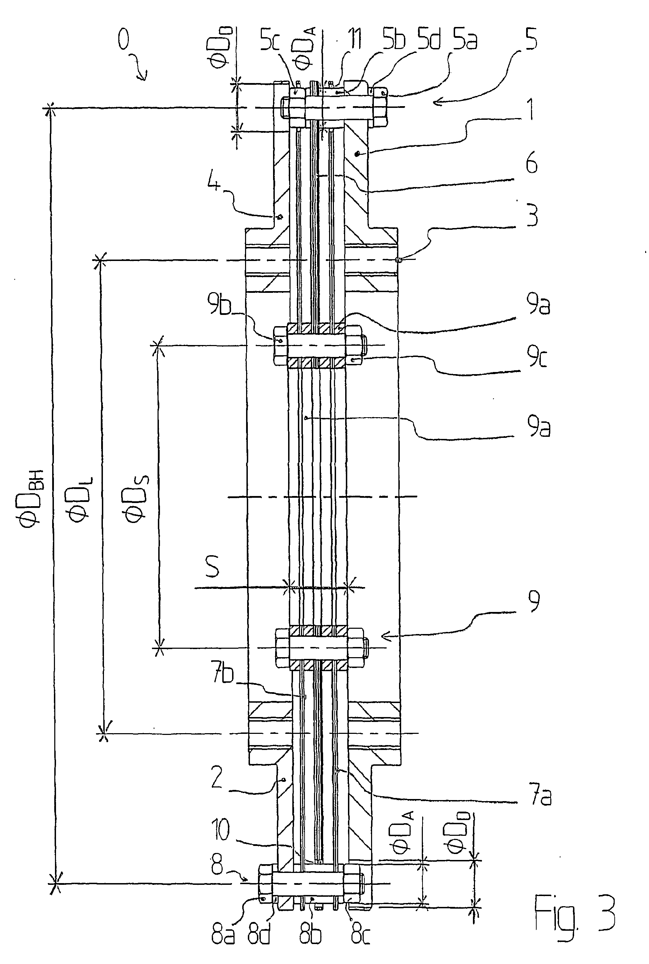

- Figur 3:: wie Figur 1, jedoch vergrößert.

Die Membrankupplung ist in Ihrer Gesamtheit mit dem Bezugszeichen 0 bezeichnet. Sie umfasst einen Antriebsflansch 1 und einen Abtriebsflansch 2. Die Flansche 1, 2 sind mit einem Antriebs-Lochkreis 3, bzw. einem Abtriebs-Lochkreis 4 versehen, über welcher die Membrankupplung 0 an vor- bzw. an nachgeordnete Maschinenelemente eines Antriebsstrangs koppelbar ist. Beide Lochkreise 3, 4 sind bei fluchtenden Flanschen konzentrisch. In dem Ausführungsbeispiel haben beide Lochkreise 3, 4 denselben Durchmesser D_{L}. Für bestimmte Einsatzzwecke ist es auch denkbar, Lochkreise 3, 4 mit unterschiedlichen Durchmessern *D_{L}*. vorzusehen. Auf einem größeren Durchmesser D_{BH} sind Bolzen/Hülsen-Anordnungen ersten Typs 5 angeordnet.

Eine Bolzen/Hülsen-Anordnung ersten Typs 5 umfasst eine Schraube 5a, zwei Hülsen 5b, eine Mutter 5c, und eine Unterlegscheibe 5d. Mittels der Bolzen/Hülsen-Anordnungen ersten Typs 5 ist ein Antriebs-Membranpaket 6 mit dem Antriebsflansch 1 verspannt. Das Antriebs-Membranpaket 6 besteht aus einer Schichtung von ringförmigen Federscheiben. Die Krafteinleitung in das Antriebs-Membranpaket 6 findet jeweils über die Hülsen 5b der Bolzen/Hülse-Anordungen ersten Typs 5 statt, zwischen denen das Antriebs-Membranpaket 6 eingespannt ist.

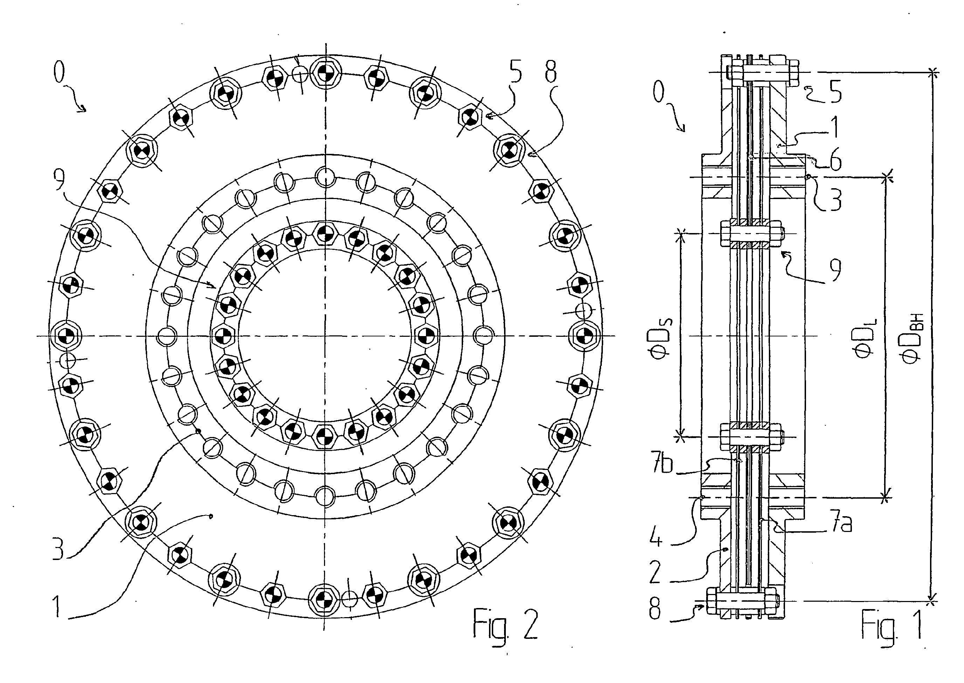

In ähnlicher Weise sind zwei Abtriebs-Membranpakete 7a, 7b über Bolzen/- Hülsen-Anordnungen zweiten Typs 8 mit dem Abtriebsflansch 2 verspannt. Die Bolzen/Hülsen-Anordnung zweiten Typs 8 umfassen eine Schraube 8a, drei Hülsen 8b, eine Mutter 8c und eine Unterlegscheibe 8d. Die Abtriebs-Membranpakete 7a, 7b sind zwischen den Hülsen 8b der Bolzen/Hülsen-Anordnung zweiten Typs 8 eingespannt. Die drei Hülsen 8b nehmen dabei auch die Funktion von Distanzstücken ein, welche die Abtriebs-Membranpakete 7a, 7b in der gewünschten axialen Ausrichtung innerhalb der Membrankupplung 0 positionieren. Die Bolzen/Hülsen-Anordnung zweiten Typs 8 sind bei fluchtenden Flanschen auf demselben Durchmesser die D_{BH} angeordnet wie die Bolzen/Hülsen-Anordnungen ersten Typs 5. In Umfangsrichtung des Durchmessers D_{BH} sind die Bolzen/Hülsen-Anordnungen 5, 8 abwechselnd auf dem Durchmesser D_{BH} angeordnet; dies ist insbesondere in Figur 2 ersichtlich.

Die Membranpakete 6, 7 sind über einen Spannsatz 9 miteinander verspannt. Dieser umfasst eine Mehrzahl von Klemmringen 9a, die zwischen den Membranpaketen 6, 7 platziert sind und diese ähnlich wie die Hülsen 5b, 8b zueinander in axialer Richtung beabstanden. Die Klemmringe 9a sind über eine Mehrzahl von Spannsatzbolzen 9b gegen Spannsatzmuttern 9c verspannt. Die Spannsatzbolzen 9b sind auf einem Spannsatzbolzen-Durchmesser D_{S} angeordnet. Für die bereits erwähnten Durchmesser gilt: D_{S}<D_{L}≤D_{BH}. Die axiale Stärke des Spannsatzes S entspricht bei dem vorliegenden Ausführungsbeispiel dem axialen Abstand der Flansche 1, 2.

Das Antriebs-Membranpaket 6 weist kreisförmige Durchbrüche ersten Typs 10 auf, die koaxial zu den Bolzen/Hülse-Anordnungen zweiten Typs 8 auf dem Durchmesser D_{BH} angeordnet sind. Der Durchmesser D_{D} der Durchbrüche übersteigt den Außendurchmesser D_{A} der Bolzen/Hülsen-Anordnung zweiten Typs 8, so dass bei fluchtenden Flanschen die Bolzen/Hülsen-Anordnung zweiten Typs 8 sich durch die Durchbrüche des ersten Typs 10 erstrecken, ohne mit dem Antriebs-Membranpaket 6 in Kontakt zu treten. Da der Durchmesser der Durchbrüche D_{D} gegenüber den Außendurchmessern der Hülsen D_{A} großzügig bemessen ist, findet eine unerwünschte Kraftübertragung zwischen dem Antriebs-Membranpaket 6 und den Bolzen/Hülsen-Anordnungen zweiten Typs 8 selbst bei einer starken Fluchtabweichung zwischen den Kupplungshälften nicht statt. In analoger Weise sind die Abtriebs-Membranpakete 7a, 7b mit Durchbrüchen zweiten Typs 11 versehen, die von den Bolzen/Hülsen-Anordnungen ersten Typs 5 ohne Kraftübertragung durchstoßen werden.

## Patentansprüche

1. Membrankupplung (0), mit einem Antriebsflansch (1) und mit einem Abtriebsflansch (2), die zwecks Drehmomentübertragung über Membranpakete (6, 7a, 7b) dergestalt miteinander verbunden sind, dass ein Antriebs-Membranpaket (6) mit dem Antriebsflansch (1) verspannt ist, dass zwei parallel geschaltete Abtriebs-Membranpakete (7a, 7b) mit dem Abtriebsflansch (2) verspannt sind, und dass die Membranpakete (6, 7a, 7b) durch einen aus Klemmringen (9a) aufgebauten Spannsatz (9) miteinander verspannt sind, wobei das Antriebs-Membranpaket (6) zwischen den beiden Abtriebs-Membranpaketen (7a, 7b) angeordnet ist,
**dadurch gekennzeichnet,**
a) **dass** das Antriebs-Membranpaket (6) über Bolzen/Hülsen-Anordnungen ersten Typs (5) mit dem Antriebsflansch (1) verspannt ist,
b) **dass** die Abtriebs-Membranpakete (7a, 7b) über Bolzen/Hülsen-Anordnungen zweiten Typs (8) mit dem Abtriebsflansch (2) verspannt sind,
c) **dass** die Bolzen/Hülsen-Anordnungen beiden Typs (5, 8) bei fluchtenden Flanschen (1, 2) auf einen gemeinsamen Durchmesser (*D*_{BH}) in Umfangsrichtung abwechselnd angeordnet sind,
d) **dass** das Antriebs-Membranpaket (6) Durchbrüche ersten Typs (10) aufweist, die auf dem Durchmesser (*D*_{BH}) der Bolzen/Hülsen-Anordnungen (5, 8) angeordnet sind, und durch welche sich die Bolzen/Hülsen-Anordnungen zweiten Typs (8) axial erstrecken, ohne bei fluchtenden Flanschen (1, 2) mit dem Antriebs-Membranpaket (6) in Kontakt zu treten,
e) und **dass** die Abtriebs-Membranpakete (7a, 7b) Durchbrüche zweiten Typs (11) aufweisen, die auf dem Durchmesser (D_{BH}) der Bolzen/Hülsen-Anordnungen (5, 8) angeordnet sind und durch welche sich die Bolzen/Hülsen-Anordnungen ersten Typs (5) axial erstrecken, ohne bei fluchtenden Flanschen (1, 2) mit den Abtriebs-Membranpaketen (7a, 7b) in Kontakt zu treten.

2. Membrankupplung gemäß Anspruch 1, **dadurch gekennzeichnet, dass** die Durchbrüche beiden Typs (10, 11) Bohrungen sind, deren Durchmesser (*D*_{D}) die Außendurchmesser (D_{A}) der einzelnen Bolzen/Hülsen-Anordnungen (5, 8) übersteigen.

3. Membrankupplung gemäß Anspruch 1, **dadurch gekennzeichnet, dass** die axiale Stärke (*S*) des Spannsatzes (9) dem axialen Abstand der Flansche (1, 2) entspricht.

4. Membrankupplung gemäß Anspruch 1, **dadurch gekennzeichnet,**
a) **dass** der Spannsatz (9) eine Mehrzahl von Spannsatzbolzen (9b) umfasst, welche auf einen Spannsatzbolzen-Durchmesser (*D*_{S}) angeordnet sind,
b) **dass** die Flansche (1, 2) jeweils einen Lochkreis (3, 4) aufweisen, über welche die Membrankupplung (0) an vor- bzw. an nachgeordnete Maschinenelemente koppelbar ist,
c) und **dass** der Spannsatzbolzen-Durchmesser (*D*_{S}) kleiner ist als der Lochkreis-Durchmesser (*D*_{L}) und dieser wiederum kleiner/gleich ist als der Durchmesser (*D*_{BH}), auf dem die Bolzen/Hülsen-Anordnungen (5, 8) angeordnet sind.

## Claims

1. A diaphragm coupling (0) comprising a drive flange (1) and a driven flange (2) which are connected together for the purposes of torque transmission by way of diaphragm packs (6, 7a, 7b) in such a way that a drive diaphragm pack (6) is braced to the drive flange (1), two driven diaphragm packs (7a, 7b) connected in parallel are braced to the driven flange (2), and the diaphragm packs (6, 7a, 7b) are braced to each other by a bracing set (9) made up of clamping rings (9a), wherein the drive diaphragm pack (9) is arranged between the two driven diaphragm packs (7a, 7b),
**characterised in that**
a) the drive diaphragm pack (6) is braced to the drive flange (1) by way of bolt/sleeve arrangements of a first type (5),
b) the driven diaphragm packs (7a, 7b) are braced to the driven flange (2) by way of bolt/sleeve arrangements of a second type (8),
c) the bolt/sleeve arrangements of both types (5, 8) are arranged on a common diameter (D_{BH}) alternately in the peripheral direction when the flanges (1, 2) are aligned,
d) the drive diaphragm pack (6) has openings of a first type (10) which are arranged on the diameter (D_{BH}) of the bolt/sleeve arrangements (5, 8) and through which the bolt/sleeve arrangements of the second type (8) axially extend, without coming into contact with the drive diaphragm pack (6) when the flanges (1, 2) are aligned, and
e) the driven diaphragm packs (7a, 7b) have openings of a second type (11) which are arranged on the diameter (D_{BH}) of the bolt/sleeve arrangements (5, 8) and through which the bolt/sleeve arrangements of the first type (5) axially extend without coming into contact with the driven diaphragm packs (7a, 7b) when the flanges (1, 2) are aligned.

2. A diaphragm coupling according to claim 1 **characterised in that** the openings of both types (10, 11) are bores whose diameters (D_{D}) exceed the outside diameters (D_{A}) of the individual bolt/sleeve arrangements (5, 8).

3. A diaphragm coupling according to claim 1 **characterised in that** the axial thickness (S) of the bracing set (9) corresponds to the axial spacing of the flanges (1, 2).

4. A diaphragm coupling according to claim 1 **characterised in that**
a) the bracing set (9) includes a plurality of bracing set bolts (9b) arranged on a bracing set bolt diameter (D_{S}),
b) the flanges (1, 2) each have a respective circle of holes (3, 4) by way of which the diaphragm coupling (0) can be coupled to machine elements arranged upstream or downstream thereof, and
c) the bracing set bolt diameter (D_{S}) is smaller than the diameter (D_{L}) of the circle of holes and same is in turn smaller than/equal to the diameter (D_{BH}) on which the bolt/sleeve arrangements (5, 8) are arranged.

## Revendications

1. Accouplement à membrane (0), avec une bride menante (1) et avec une bride menée (2) qui, dans le but d'une transmission du couple de rotation, sont reliées par des paquets de membrane (6, 7a, 7b) de telle sorte l'une avec l'autre qu'un paquet de membrane menant (6) est maintenu par serrage avec la bride menante (1), que deux paquets de membrane menés (7a, 7b) commutés parallèlement sont maintenus par serrage avec la bride menée (2) et en ce que les paquets de membrane (6, 7a, 6b) sont maintenus par serrage par un jeu de serrage (9) formé par des bagues de serrage (9a), où le paquet de membrane menant (6) est disposé entre les deux paquets de membrane menés (7a, 7b),
**caractérisé**
a) **en ce que** le paquet de membrane menant (6) est maintenu par serrage par des agencements de boulon/douille d'un premier type (5) avec la bride menante (1),
b) **en ce que** les paquets de membrane menés (7a, 7b) sont maintenus par serrage par des agencements de boulon/douille d'un deuxième type (8) avec la bride menée (2),
c) **en ce que** les agencements de boulon/douille des deux types (5,8), lorsque les brides (1,2) sont alignées, sont disposés alternativement sur un diamètre commun (D_{BH}) dans la direction périphérique,
d) **en ce que** le paquet de membrane menant (6) présente des perçages du premier type (10) qui sont disposés sur le diamètre (D_{BH}) des agencements de boulon/douille (5,8) et à travers lesquels s'étendent axialement les agencements de boulon/douille du deuxième type (8) sans entrer en contact, lorsque les brides (1,2) sont alignées, avec le paquet de membrane menant (6),
e) et **en ce que** les paquets de membrane menés (7a, 7b) présentent des perçages du deuxième type (11) qui sont disposés sur le diamètre (D_{BH}) des agencements de boulon/douille (5,8) et à travers lesquels s'étendent axialement les agencements de boulon/douille du premier type (5) sans entrer en contact, lorsque les brides (1,2) sont alignées, avec les paquets de membrane menés (7a,7b).

2. Accouplement à membrane selon la revendication 1, **caractérisé en ce que** les perçages des deux types (10,11) sont des alésages dont le diamètre (D_{O}) dépasse les diamètres extérieurs (D_{A}) des différents agencements de boulon/douille (5,8).

3. Accouplement à membrane selon la revendication 1, **caractérisé en ce que** l'épaisseur axiale (S) du jeu de serrage (9) correspond à l'écart axial des brides (1,2).

4. Accouplement à membrane selon la revendication 1,
**caractérisé**
a) **en ce que** le jeu de serrage (9) comprend une pluralité de boulons de jeu de serrage (9b) qui sont disposés sur un diamètre de boulon de jeu de serrage (D_{S}),
b) **en ce que** les brides (1,2) présentent chacune un cercle de trous (3,4) par lequel l'accouplement à membrane (0) peut être couplé à des éléments de machine disposés en amont respectivement en aval,
c) et **en ce que** le diamètre de boulon de jeu de serrage (Ds) est plus petit que le diamètre de cercle de trous (D_{L}), et celui-ci est à nouveau plus petit/égal au diamètre (D_{BH}) sur lequel sont disposés les agencements de boulon/douille (5,8).
